## Europäisches Patentamt

(19) **European Patent Office**

**Office européen des brevets**

(11) Veröffentlichungsnummer: **0 233 546**
**B1**

(12) # EUROPÄISCHE PATENTSCHRIFT

(45) Veröffentlichungstag der Patentschrift:
**17.05.89**

(51) Int. Cl.⁴: **F16C 13/00**

(21) Anmeldenummer: **87101489.0**

(22) Anmeldetag: **04.02.87**

(54) **Durchbiegungsgesteuerte Walze.**

(30) Priorität: **15.02.86 DE 3604839**

(43) Veröffentlichungstag der Anmeldung:
**26.08.87 Patentblatt 87/35**

(45) Bekanntmachung des Hinweises auf die Patenterteilung:
**17.05.89 Patentblatt 89/20**

(84) Benannte Vertragsstaaten:
**CH DE GB IT LI SE**

(56) Entgegenhaltungen:
**GB-A- 2 114 683**
**GB-A- 2 158 196**

(73) Patentinhaber: **Kleinewefers GmbH,**
**Kleinewefersstrasse 25, D-4150 Krefeld 1(DE)**

(72) Erfinder: **Sonnen, Rudolf, Dionysiusstrasse 159,**
**D-4150 Krefeld 1(DE)**

(74) Vertreter: **Knoblauch, Ulrich, Dr.-Ing.,**
**Kühhornshofweg 10, D-6000 Frankfurt am Main 1(DE)**

## Beschreibung

Die Erfindung bezieht sich auf eine durchbiegungsgesteuerte Walze, bei der ein Walzenmantel von einem drehfesten Träger durchsetzt, auf diesem mittels einer über die Walzenlänge vorgesehenen Stützvorrichtung gehalten und an den Enden auf einer drehfest gehaltenen Buchse gelagert ist, deren Innenquerschnitt in der Wirkebene eine größere Höhe hat als der Querschnitt des von ihr umgebenen Trägerzapfens, sowie auf ein Verfahren zum Umbauen einer solchen Walze mit radialverlagerbaren Walzenenden in eine Walze mit radial festgehaltenen Walzenenden.

Eine solche durchbiegungsgesteuerte Walze ist durch die DE-A 3 325 385 bekannt. Sie weist als Stützvorrichtung axial nebeneinander angeordnete hydrostatische Lagerelemente auf, denen Druckmittel mit einstellbarem Druck zugeführt wird. Wegen der Bemessung des Innenquerschnitts der an den Walzenenden vorgesehenen Buchsen kann der Walzenmantel insgesamt in der durch die Lagerelemente bestimmten Wirkebene radial verschoben werden.

Bei einer anderen bekannten durchbiegungsgesteuerten Walze (GB-A 2 158 196) sind die Walzenenden über Wälzlager unmittelbar auf dem Träger abgestützt.

Hier sind die Walzenenden radial fesgehalten, während die hydrostatischen Lagerelemente den Walzenmantel weiterhin radial belasten.

Diese Walzen haben vielseitige Anwendungszwecke. Beispielsweise werden sie in der Papierindustrie in erheblichem Umfang eingesetzt. Es gibt Superkalander, die gleichzeitig beide Typen verwenden.

Das Vorhandensein von zwei verschiedenen Walzentypen macht es erforderlich, daß generell zwei verschiedene Walzen gefertigt werden müssen, daß für das Ersatzteilgeschäft zwei verschiedene Walzen zur Verfügung stehen müssen und daß ein Betrieb, der beide Walzentypen benutzt, aus Vorsichtsgründen zwei verschiedene Ersatzwalzen vorrätig haben muß.

Der Erfindung liegt die Aufgabe zugrunde, Mittel für einen einfachen Walzenumbau vorzusehen, der es ermöglicht, ein und dieselbe Walze wahlweise mit radial verschieblichen Enden oder mit am Träger festgelegten Enden zu verwenden.

Diese Aufgabe wird erfindungsgemäß gelöst durch ein Einschubsegment, dessen Außenfläche der Innenfläche der Buchse und dessen Innenfläche der Außenfläche des Trägerzapfens, jeweils in der Wirkebene und zu deren beiden Seiten, angepaßt ist und dessen größte Dicke gleich der Höhendifferenz von Buchsen-Innenquerschnitt und Trägerzapfenquerschnitt ist.

Wenn man von einer durchbiegungsgesteuerten Walzen mit radial verschiebbarer Buchse ausgeht, füllt das Einschubsegment den freien Querschnitt zwischen Buchse und Trägerzapfen weitgehend aus, so daß sich die Buchsen radial nicht mehr verschieben können und der Walzenmantel mit seinen Enden am Träger festgelegt ist. Die hierbei erforderliche exzentrische Lage von Träger und Walzenmantel ist zulässig, da dies durch einen kleinen Zusatzhub der Lagerelemente der Stützvorrichtung ausgeglichen wird. Wichtig ist es hierbei, daß lediglich einige äußere Bauteile vom Trägerzapfen abgenommen werden müssen, Wälzlager und Buchse aber an Ort und Stelle bleiben können. Aus diesem Grund ist Ein- und Ausbau des Einschubsegments mit einfachem Werkzeug und sogar in jeder Werkstatt eines Kalanderbetreibers durchführbar.

Nunmehr kann ein und dieselbe Walze als radial verschiebliche Walze oder - nach Einbau des Einschubelements - als radial festgehaltene Walze benutzt werden. Während früher ein Kalanderbetreiber zwei verschiedene Ersatzwalzen vorrätig halten mußte, genügt es jetzt, lediglich eine Ersatzwalze und ein Einschubsegment vorzusehen. Dies bringt ganz erhebliche Kosten- und Platzeinsparungen mit sich. Auch für den Hersteller ergeben sich Erleichterungen, weil ein Walzentyp in größeren Stückzahlen gefertigt werden kann und die Differenzierung lediglich durch Einsetzen des Einschubelements erfolgt.

Wenn die Buchse eine zylindrische Innenfläche mit größerem Radius als die zylindrische Außenfläche des Trägerzapfens hat, empfiehlt es sich, daß das Einschubsegment im wesentlichen durch zwei Zylinderflächen mit den Radien von Buchsen-Innenfläche bzw. Trägerzapfen-Außenfläche begrenzt ist, deren Achsen um die Differenz der Radien gegeneinander versetzt sind. Diese ergibt eine sichere und gleichmäßige Abstützung der Buchse. Die exzentrische Versetzung der beiden Zylinderflächen führt auch dazu, daß das Einschubsegment gegen eine Verschiebung in Umfangsrichtung weitgehend gesichert ist.

Das Einschubsegment sollte sich über weniger als 180°, nämlich insbesondere über 100° bis 140°, vorzugsweise etwa 120°, erstrecken. Dies reicht aus, um die erforder lichen Kräfte zu übertragen. Auf der anderen Seite ist aber die Wandstärke des Einschubsegments noch groß genug, um eine ausreichende Stabilität zu gewährleisten.

Vorzugsweise ist das Einschubsegment auf einer Seite, vorzugsweise der Außenseite, mit mindestens zwei parallelen Axialnuten versehen. Diese Axialnuten geben dem Einschubsegment eine gewisse Biegebeweglichkeit, was die Anpassung beim Einschieben erleichtert.

Bei einem bevorzugten Ausführungsbeispiel ist dafür gesorgt, daß die Buchse eine Innenfläche aufweist, die von der Zylinderform abweichende Flächenteile besitzt, und daß die der Innenfläche angepaßte Außenfläche des Einschubsegments bis zu diesen Flächenteilen reicht. Hierdurch wird eine hervorragende Sicherung gegen Umfangsverschiebung erzielt.

Günstig ist es auch, daß die Buchse einen ersten Abschnitt mit zylindrischer Innenfläche und einen zweiten axial versetzten Abschnitt mit von der Zylinderform abweichenden Flächenteilen besitzt und daß das Einschubsegment sich mit durchgehend gleichem Querschnitt unter beiden Abschnitten erstreckt. Der ein Abschnitt dient daher der Kraftübertragung und der andere Abschnitt der Arretierung des Einschubsegments in Umfangsrichtung.

Diese Funktionstrennung erleichtert die Bearbeitung.

Die axiale Länge des Einschubelements ist vorzugsweise gleich dem Abstand zwischen einer Stufe des Trägers und einer auf den Trägerzapfen aufgesetzten Dichtungs-Ringplatte. Auf diese Weise ist das Einschubelement auch in Axialrichtung gesichert.

Ein Verfahren zum Umbau einer durchbiegungsgesteuerten Walze, bei der ein Walzenmantel von einem drehfesten Träger durchsetzt, auf diesem mittels einer über die Walzenlänge vorgesehenen Stützvorrichtung gehalten und an den Enden auf einer drehfest gehaltenen Buchse gelagert ist, deren Innenquerschnitt in der Wirkebene eine größere Höhe hat als der Querschnitt des von ihr umgebenen Trägerzapfens, mit radial verlagerbaren Walzenenden in eine Walze mit radial festgehaltenen Walzenenden ist dadurch gekennzeichnet, daß Trägerzapfen und Buchse einseitig zur Anlage gebracht und dann das Einschubsegment auf der gegenüberliegenden Seite in den Spalt zwischen Trägerzapfen und Buchse eingeführt wird. Da Trägerzapfen und Buchse unter dem Einfluß von Gewichtskräften zur Anlage gebracht werden können, steht der Spalt für das Einführen des Einschubsegments in voller Größe zur Verfügung.

Insbesondere kann der Walzenmantel auf seinen Schleifschultern abgelegt, der Trägerzapfen bis zur Anlage an der Buchse abgesenkt und dann das Einschubsegment in den oben gebildeten Spalt eingeführt werden.

Die Erfindung wird nachstehend anhand in der Zeichnung dargestellter, bevorzugter Ausführungsbeispiele näher erläutert. Es zeigen:

Fig. 1 einen Längsschnitt durch den Endabschnitt einer durchbiegungsgesteuerten Walze mit radial verschiebbarer Buchse,

Fig. 2 die gleiche Walze mit durch das Einschubsegment festgelegter Buchse,

Fig. 3 einen Schnitt durch die Buchse längs der Linie A-A in Fig. 2 und

Fig. 4 einen Schnitt ähnlich Fig. 3 durch eine andere Ausführungsform.

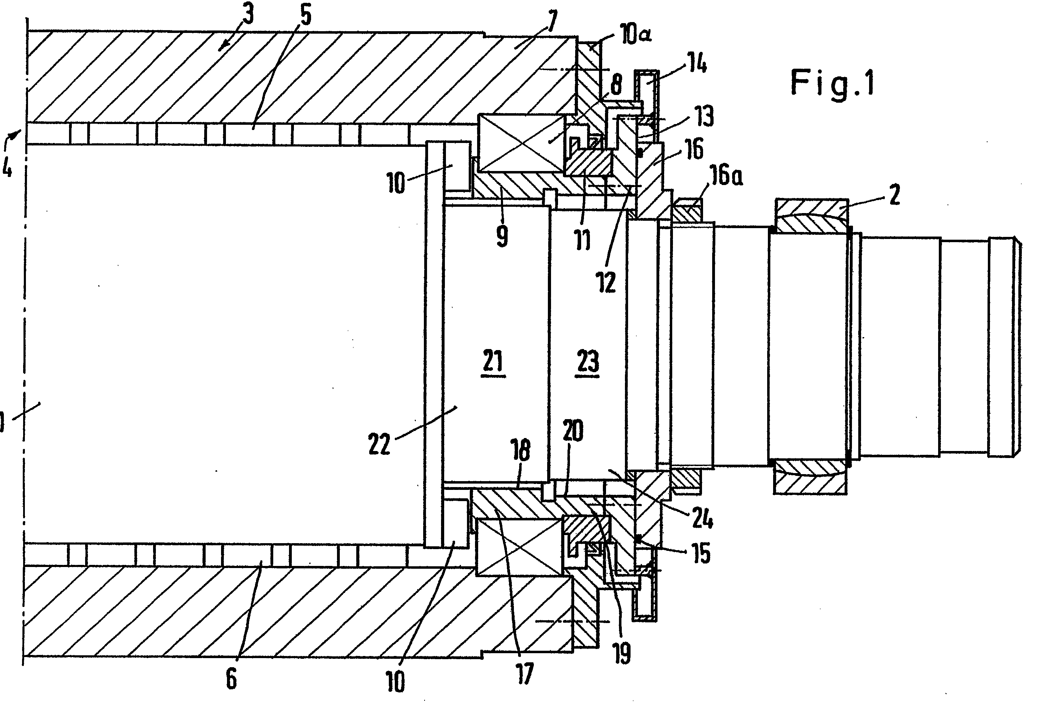

Die in Fig. 1 veranschaulichte Walze weist einen Träger 1 auf, der in einem Kalottenlager 2 drehfest gelagert ist. Ihn umgibt ein Walzenmantel 3, der durch eine Stützvorrichtung 4 mit zahlreichen nebeneinander angeordneten hydrostatischen Lagerelementen 5 und auf der gegenüberliegenden Seite angeordneten Gegenlagerelementen 6 auf dem Träger 1 abgestützt ist. Das Ende 7 des Walzenmantels 3 ist über ein Wälzlager 8 auf einer Buchse 9 gelagert, die mit Hilfe von am Träger 1 angebrachten Drehmomentstützen 10, welche in eine Radialnut eingreifen, drehfest gehalten ist (wie dies beispielsweise in DE-OS 33 25 385 näher erläutert ist). Der drehbare Teil des Wälzlagers 8 ist durch einen Lagerdeckel 10a am Walzenmantel arretiert. Der drehfeste Teil des Wälzlagers 8 ist durch einen Ring 11 mit einer Chromoxydschicht und einen an der Buchse befestigten Ring 12 mit einer äußeren Dichtfläche 13 gesichert. Der Ring 12 trägt außen eine Öltropfwanne 14. Die Dichtfläche 13 steht mit einem Dichtring 15 einer Dichtungs-Ringplatte 16 in dichtendem Kontakt. Letztere ist mittels einer Ringmutter 16a am Träger 1 besfestigt.

Die Buchse 9 hat einen ersten Abschnitt 17 mit einer zylindrischen Innenfläche 18 und eine zweiten Abschnitt 19 mit einer von der Zylinderform abweichenden Innenfläche 20. Der erste Abschnitt 17 umgibt einen Trägerzapfen 21 mit zylindrischer Außenfläche 22 und der zweite Abschnitt 19 einen Fortsatz 23 des Lagerzapfens mit zylindrischer Außenfläche 24, die einen geringeren Durchmesser hat.

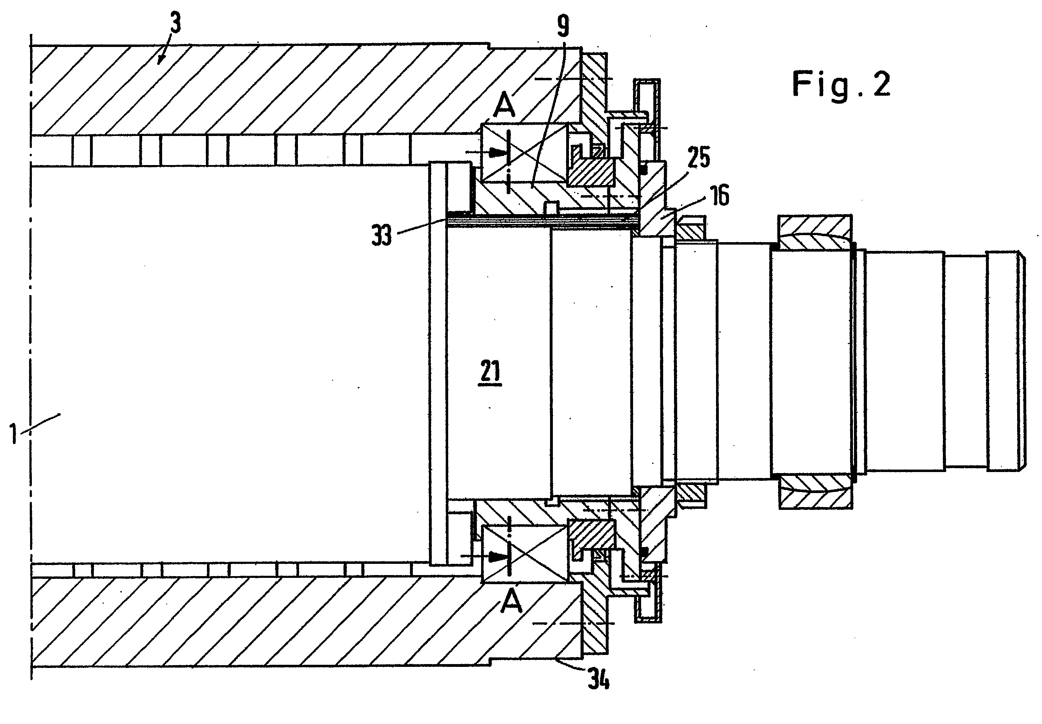

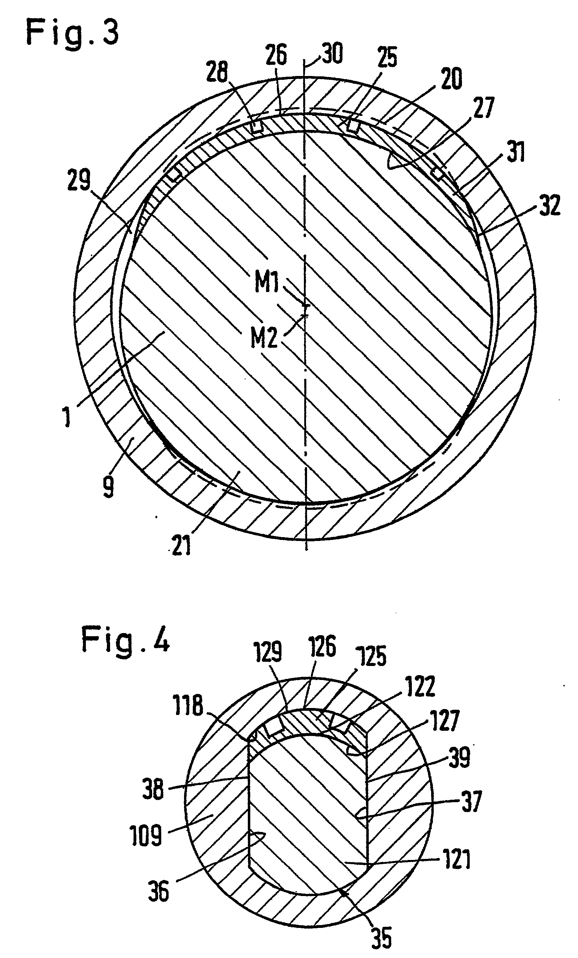

Fig. 2 zeigt dieselbe Walze, jedoch mit eingesetztem Einschaubsegment 25. Dieses Einschaubsegment besitzt eine Außenfläche 26, welche der zylindrischen Innefläche 18 der Buchse 9 entspricht, und eine zylindrische Innenfläche 27, welche der zylindrischen Außenfläche 22 des Trägerzapfens 21 entspricht. Die Mittelachsen $M_1$ und $M_2$ dieser beiden Zylinderflächen sind um die Differenz der Radien der beiden Zylinderflächen versetzt. An der Außenseite des Einschubsegments sind vier Axialschlitze 28 vorgesehen, die eine gewisse Biegeelastizität bewirken. Auf diese Weise kann der Spalt 29 zwischen Trägerzapfen 21 und Buchse 9 im Bereich der durch die Lagerelemente 5 vorgegebenen Wirkebene 30 und zu beiden Seiten davon derart ausgefüllt werden, daß sich eine große Kraftübertragungsfläche ergibt. Bei genauer Bemessung ist ein Verschieben in Umfangsrichtung wegen der exzentrsichen Begrenzung des Einschubsegments 25 nicht möglich. Wenn im zweiten Abschnitt 19 der Buchse 9 eine Innenfläche 20 mit von der Kreisform abweichenden Flächenteilen 32 vorhanden ist, wie dies in Fig. 3, teilweise gestrichelt, angedeutet ist, können die Enden 31 des Einschubsegments 25 diesen Flächenteilen 32 angepaßt sein, wodurch sich eine zusätzliche Sicherung ergibt. In Axialrichtung hat das Einschubsegment 25 eine feste Lage, weil es einerseits an einer Schulter 33 des Trägers 1 anliegt und andererseits durch die Dichtungs-Ringplatte 16 festgehalten wird.

Um das Einschubsegment 25 in die Walze der Fig. 1 einbauen zu können, ist es lediglich erforderlich, den Walzenmantel 3 auf seinen Schliefschultern 34 abzustützen und den Träger 1 do weit abzuseken, bis der Trägerzapfen 21 auf der Buchse 9 aufsitzt. Wenn dann die Teile 2, 16a und 16 demontiert worden sind, kann das Einschubsegment 25 in den Spalt 29 eingeschoben werden, ohne daß dies den Einsatz von Spezialwerkzeug erforderlich macht. Alsdann können die Teile 16, 16a und 2 wieder anmontiert werden. Der Ausbau des Einschubsegments 25 geht in ähnlicher Weise vonstatten.

In Fig. 4 ist eine abgewandelte Ausführungsform veranschaulicht. Eine Buchse 109 besitzt ein Führungsfenster 35 mit zwei parallelen Führungsflächen 36 und 37. Dieses Fenster wird von einem Trägerzapfen 121 mit parallelen Seitenflächen 38 und 39 durchsetzt. Auf diese Weise können die Walzenenden radial beweglich auf dem Träger geführt werden. Wird nun der Träger bis zur Anlage seines Trägerzapfens 121 am Grund des Fensters 35 abgesenkt, so kann in den entstehenden Spalt 129 das Einschubsegment 125 eingeführt werden, dessen Enden sich an den Führungsflächen 36 und 37 abstützen. Auch hier ist die Außenfläche 126 und die Innenfläche 127 des Einschubsegments 125 der Innenfläche 118 der Buchse 109 bzw. der Außenfläche 122 des Trägerzapfens 121 angepaßt. Beispielsweise haben beide den gleichen Radius.

Selbstverständlich kann die Stützvorrichtung auch auf andere Weise ausgebildet sein. So kann statt der einfachen Lagerelemente ein durchgehendes Druckmittelpolster vorgesehen sein. Der Walzenmantel kann auch durch elektromagnetische Kräfte drehbar auf dem Träger abgestützt sein. Auch eine mechanische Abstützung durch radial verstellbare Rollen ist möglich.

## Patentansprüche

1. Durchbiegungsgesteuerte Walze, bei der ein Walzenmantel (3) von einem drehfesten Träger (1) durchsetzt, auf diesem mittels einer über die Walzenlänge vorgesehenen Stützvorrichtung (5, 6) gehalten und an den Enden auf einer drehfest gehaltenen Buchse (9, 109) gelagert ist, deren Innenquerschnitt in der Wirkebene eine größere Höhe hat als der Querschnitt des von ihr umgebenen Trägerzapfens (21, 121), gekennzeichnet durch ein Einschubsegment (25; 125), dessen Außenfläche (26; 126) der Innenfläche (18; 118) der Buchse (9; 109) und dessen Innenfläche (27; 127) der Außenfläche (22; 122) des Trägerzapfens (21; 121), jeweils in der Wirkebene (30) und zu deren beiden Seiten, angepaßt ist und dessen größte Dicke gleich der Höhendifferenz von Buchsen-Innenquerschnitt und Trägerzapfen-Querschnitt ist.

2. Walze nach Anspruch 1, bei der die Buchse (9, 109) eine zylindrische Innefläche mit größerem Radius als die zylindrische Außenfläche des Trägerzapfens (21, 121) hat, dadurch gekennzeichnet, daß das Einschubsegment (25) im wesentlichen durch zwei Zylinderflächen (26, 27) mit den Radien von Buchsen-Innenfläche (18) bzw. Trägerzapfen-Außenfläche (22) begrenzt ist, deren Achsen um die Differenz der Radien gegeneinander versetzt sind.

3. Walze nach Anspruch 1 oder 2, dadurch gekennzeichnet, daß das Einschubsegment (25; 125) sich über weniger als 180° erstreckt.

4. Walze nach Anspruch 3, dadurch gekennzeichnet, daß das Einschubsegment (25; 125) sich über 100° bis 140°, vorzugsweise etwa 120°, erstreckt.

5. Walze nach einem der Ansprüche 1 bis 4, dadurch gekennzeichnet, daß das Einschubsegment (25; 125) auf einer Seite mit mindestens zwei parallelen Axialnuten versehen ist.

6. Walze nach einem der Ansprüche 1 bis 5, dadurch gekennzeichnet, daß die Buchse (9; 109) eine Innenfläche (20; 118) aufweist, die von der Zylinderform abweichende Flächenteile (32) besitzt, und daß die der Innenfläche angepaßte Außenfläche (26; 126) des Einschubsegments (25; 125) bis zu diesen Flächenteilen reicht.

7. Walze nach Anspruch 6, dadurch gekennzeichnet, daß die Buchse (9) einen ersten Abschnitt (17) mit zylindrischer Innenfläche (18) und einen zweiten axial versetzten Abschnitt (19) mit von der Zylinderform abweichenden Flächenteilen (20) besitzt und daß das Einschubsegment (25) sich mit durchgehend gleichem Querschnitt unter beiden Abschnitten erstreckt.

8. Walze nach einem der Ansprüche 1 bis 7, dadurch gekennzeichnet, daß die axiale Länge des Einschubelements (25) gleich dem Abstand zwischen einer Stufe (33) des Trägers (1) und einer auf den Trägerzapfen (21) aufgesetzten Dichtungs-Ringplatte (16) ist.

9. Verfahren zum Umbauen einer durchbiegungsgesteuerten Walze, bei der ein Walzenmantel (3) von einem drehfesten Träger (1) durchsetzt, auf diesem mittels einer über die Walzenlänge vorgesehenen Stützvorrichtung (5, 6) gehalten und an den Enden auf einer drehfest gehaltenen Buchse (9, 109) gelagert ist, deren Innenquerschnitt in der Wirkebene eine größere Höhe hat als der Querschnitt des von ihr umgebenen Trägerzapfens (21, 121), mit radial verlagerbaren Walzenenden in eine Walze mit radial festgehaltenen Walzenenden, nach einem der Ansprüche 1 bis 8, dadurch gekennzeichnet, daß Trägerzapfen (21, 121) und Buchse (9, 109) einseitig zur Anlage gebracht und dann das Einschubsegment (25) auf der gegenüberliegenden Seite in den Spalt zwischen Trägerzapfen (21, 121) und Buchse (9, 109) eingeführt wird.

10. Verfahren nach Anspruch 9, dadurch gekennzeichnet, daß der Walzenmantel (3) auf seinen Schleifschultern abgelegt, der Trägerzapfen (21, 121) bis zur Anlage an der Buchse (9, 109) abgesenkt und dann das Einschubsegment (25) in den oben gebildeten Spalt eingeführt wird.

## Revendications

1. Rouleau à déflexion réglable, pour lequel une enveloppe de rouleau (3) est traversée par un support (1) fixe en rotation, est maintenue sur celu-ci au moyen d'un dispositif d'appui (5, 6) prévu sur la longueur du rouleau et est monté aux extrémités sur une douille (9, 109) maintenue bloquée en rotation, dont la section transversale intérieure dans le plan d'action présente une hauteur plus grande que la section transversale du tourillon support (21, 121) entouré par celle-ci, caractérisé par un segment d'introduction (25; 125) dont la surface extérieure (26; 126) est adaptée à la surface intérieure (18; 118) de la douille (9; 109), et dont la surface intérieure (27; 127) est adapté à la surface extérieure (22; 122) du tourillon support (21; 121), chaque fois dans le plan d'action (30) et sur ses deux côtés, et dont l'épaisseur la plus grande est identique à la différence de hauteur de la section transversale intérieure de douille et de la section transversale de tourillon support.

2. Rouleau selon la revendication 1, pour lequel la douille (9, 109) présente une surface intérieure cylindrique de plus grand rayon que la surface extérieure cylindrique du tourillon support (21, 121), caractérisé en ce que le segment d'introduction (25) est sensiblement délimité par deux faces cylindriques (26, 27) aux rayons de la surface intérieure de douille (18), respectivement de la surface extérieure de tourillon support (22), dont les axes sont décalés entre eux de la différence des rayons.

3. Rouleau selon la revendication 1 ou 2, caractérisé en ce que le segment d'introduction (25; 125) s'étend sur moins de 180°.

4. Rouleau selon la revendication 3, caractérisé en ce que le segment d'introduction (25; 125) s'étend sur 100° à 140°, de préférence sur approximativement 120°.

5. Rouleau selon l'une des revendications 1 à 4, caractérisé en ce que le segment d'introduction (25; 125) est pourvu sur un côté d'au moins deux gorges axiales parallèles.

6. Rouleau selon l'une des revendications 1 à 5, caractérisé en ce que la douille (9; 109) présente une surface intérieure (20; 11B) qui possède des parties superficielles (32) s'écartant de la forme cylindrique et en ce que la surface extérieure (26; 126) du segment d'introduction (25; 125), adaptée à la surface intérieure, arrive jusqu'à ces parties superficielles.

7. Rouleau selon la revendication 6, caractérisé en ce que la douille (9) possède une première section (17) à surface intérieure (18) cylindrique et une deuxième section (19), décalée axialement, avec des parties superficielles (20) s'écartant de la forme cylindrique et en ce que le segment d'introduction (25) s'étend sous les deux sections avec une section transversale continuellement identique.

8. Rouleau selon l'une des revendication 1 à 7, caractérisé en ce que la longueur axiale de l'élément d'introduction (25) est identique à l'écartement entre un étagement (33) du support (1) et une plaque annulaire d'étanchéité (16) appliquée sur le tourillon support (21).

9. Procédé pour convertir un rouleau à déflexion variable, dans lequel une enveloppe de rouleau (3) est traversée par un support (1) fixe en rotation, est maintenue sur celui-ci au moyen d'un dispositif d'appui (5, 6) prévu sur la longueur du rouleau et est monté aux extrémités sur une douille (9, 109) maintenue bloquée en rotation, dont la section transversale intérieure dans le plan d'action présente une hauteur plus grande que la section transversale du tourillon support (21, 121) entouré par celle-ci, avec des extrémités de rouleau déplaçables radialement dans un rouleau à extrémités de rouleau maintenues bloquées radialement, selon l'une des revendications 1 à 8, caractérisé en ce que le tourillon support (21, 121) et la douille (9, 109) sont placés en appui sur un côté et que le segment d'introduction (25) est ensuite introduit sur le côté opposé, dans la fente existant entre tourillon support (21, 121) et douille (9, 109.

10. Procédé selon la revendication 9, caractérisé en ce que l'enveloppe de rouleau (3) est déposée sur ses épaulements de rectification, le tourillon de palier (21, 121) est enfoncé jusqu'à être en appui sur la douille (9, 109) et le segment d'introduction (25) est alors introduit par la fente formée sur le dessus.

## Claims

1. Adjustable-curvature roll, in which a roll casing (3), through which passes a carrier (1) fixed in terms of rotation, is retained on the latter by means of a supporting device (5, 6) provided over the length of the roll and at the ends is mounted on a bush (9, 109) which is held fixedly in terms of rotation and of which the inner cross-section in the effective plane is of greater height than the cross-section of the carrier journal (21, 121) surrounded by it, characterized by a push-in segment (25; 125), of which the outer face (26; 126) is matched to the inner face (18; 118) of the bush (9; 109) and the inner face (27; 127) is matched to the outer face (22; 122) of the carrier journal (21; 121), respectively in the effective plane (30) and on both sides of this, and the greatest thickness of which is equal to the height difference of the bush inner cross-section and carrier-journal cross-section.

2. Roll according to Claim 1, in which the bush (9, 109) has a cylindrical inner face of larger radius than the cylindrical outer face of the carrier journal (21, 121), characterized in that the push-in segment (25) is limited essentially by two surfaces of a cylinder (26, 27) which have the radii of the bush inner face (18) and carrier-journal outer face (22) respectively and the axes of which are offset relative to one another by the difference in the radii.

3. Roll according to Claim 1 or 2, characterized in that the push-in segment (25; 125) extends over less than 180°.

4. Roll according to Claim 3, characterized in that the push-in segment (25; 125) extends over 100° to 140°, preferably approximately 120°.

5. Roll according to one of Claims 1 to 4, characterized in that the push-in segment (25; 125) is equipped on one side with at least two parallel axial grooves.

6. Roll according to one of Claims 1 to 5, characterized in that the bush (9; 109) has an inner face (20; 118) which has face parts (32) different from the cylindrical form, and in that the outer face (26; 126) of the push-in segment (25; 125) matched to the inner face reaches as far as these face parts.

7. Roll according to Claim 6, characterized in that the bush (9) has a first portion (17) with a cylindrical inner face (18) and a second axially offset portion (19) with face parts (20) different from the cylindrical form, and in that the push-in segment (25) extends with a continuously equal cross-section under the two portions.

8. Roll according to one of Claims 1 to 7, characterized in that the axial length of the push-in element (25) is equal to the distance between a step (33) of the carrier (1) and an annular sealing plate (16) attached onto the carrier journal (21).

9. Process for changing an adjustable-curvature roll, in which a roll casing (3), through which passes a carrier (1) fixed in terms of rotation, is retained on the latter by means of a supporting device (5, 6) provided over the length of the roll and at the ends is mounted on a bush (9, 109) which is held fixedly in terms of rotation and of which the inner cross-section in the effective plane is of greater height than the cross-section of the carrier journal (21, 121) surrounded by it, with radially shiftable roll ends into a roll with radially fixed roll ends, according to one of Claims 1 to 8, characterized in that the carrier journal (21, 121) and the bush (9, 109) are brought to bear against one another on one side and the push-in segment (25) is then introduced, on the opposite side, into the gap between the carrier journal (21, 121) and the bush (9, 109).

10. Process according to Claim 9, characterized in that the roll casing (3) is laid down on its grinding shoulders, the carrier journal (21, 121) is lowered until it comes to bear against the bush (9, 109), and then the push-in segment (25) is introduced into the gap formed at the top.

Fig.1

Fig. 2

# Fig.3

# Fig.4